# FASCICULE DE BREVET EUROPEEN

(11) **EP 1 162 769 B1**
(45) Date de publication et mention de la délivrance du brevet: **20.10.2004**
(21) Numéro de dépôt: 01401286.8
(22) Date de dépôt: 17.05.2001
(51) Int. Cl.: H04B 10/17, H04L 7/00

(54) **Dispositif de regeneration de signaux optiques**
Vorrichtung zum Regenerieren optischer Signale
Apparatus for the regeneration of optical signals

(30) Priorité: 09.06.2000 FR 0007436
(43) Date de publication de la demande: 12.12.2001
(73) Titulaire: ALCATEL, 75008 Paris (FR)
(72) Inventeur: Brindel, Patrick, 91310 Longpont S/Orge (FR); Janz, Christopher, Nepean, Ontario K2H 9G8 (CA)
(74) Mandataire: Fournier, Michel Robert Marie

(56) Documents cités:
- EP-A- 0 854 379
- EP-A- 0 901 245
- FR-A- 2 781 625

## Description

L'invention concerne le domaine des télécommunications sur fibre optique, et plus particulièrement des télécommunications sur des longues distances.

Lors de leur propagation dans des fibres, des signaux optiques subissent divers phénomènes physiques dégradant la qualité des signaux. Comme phénomènes principaux, on peut par exemple nommer les pertes en ligne, l'accumulation de bruit ou encore la gigue de Gordon-Haus.

Les pertes en ligne peuvent être compensées par une amplification optique en ligne, par exemple à l'aide d'un amplificateur à fibre dopée Erbium, également connu sous le sigle « EDFA ».

Toutefois, cette amplification en ligne ne permet pas de prévenir la gigue de Gordon-Haus qui cause une incertitude temporelle de l'arrivée des bits du signal.

De plus, l'amplification en ligne engendre une accumulation de bruit provenant de l'émission spontanée dans les amplificateurs optiques.

Par ailleurs, des effets non linéaires comme par exemple l'effet Kerr, l'effet Raman ou la modulation de phase croisée (XPM) pour des systèmes de transmission à multiplexage en longueur d'onde, appelés systèmes WDM (pour « Wavelength Division Multiplexing » en anglais) limitent dans certains cas la longueur maximale de transmission des signaux optiques.

C'est pourquoi il est nécessaire de disposer, à des intervalles réguliers, dans les lignes de transmission à fibre optique des régénérateurs, de préférence des régénérateurs « 3R », ayant pour action de recaler les signaux optiques dans le temps (« **R**etiming » en anglais), de les remettre dans leurs enveloppes d'origine (« **R**eshaping » en anglais), et de les amplifier (« **R**eamplifying » en anglais) à leurs nivèaux d'amplitude d'origine.

Un tel régénérateur est par exemple connu de la demande française FR 2781625 au nom de la Demanderesse, du document « 40 Gbit/s polarisation-insensitive and wavelength-independent InP Mach-Zehnder modulator for all optical regeneration », Electronics Letters, Vol. 35, n° 9, p. 730, 29 avril 1999, et de « Contribution à l'étude de la régénération optique dans les systèmes de transmission par solitons », par O. Leclerc, thèse soutenu le 1^{er} octobre 1998, Université de Nice-Sophia-Antipolis.

Le régénérateur décrit dans ces documents dispose d'un modulateur MACH-Zehnder pour la modulation synchrone phase/amplitude des signaux optiques à régénérer. Dans chacun des bras du modulateur Mach-Zehnder est disposé un amplificateur optique à semi-conducteur dont le gain est modulé sur la base d'un signal d'horloge récupéré.

A cet effet, pour une des configurations possibles, ce régénérateur dispose d'un circuit tout optique ou optoélectronique de récupération du signal d'horloge à partir des signaux optiques à régénérer.

Toutefois, dans ce régénérateur connu, la structure interférométrique et le circuit de récupération du signal d'horloge constituent des entités séparées et indépendantes, ce qui est un frein à l'intégration de ce composant.

La présente invention vise à perfectionner un régénérateur du type connu des documents précités en proposant un régénérateur ayant une plus grande aptitude à l'intégration.

A cet effet, l'invention a pour objet un dispositif de régénération de signaux optiques par une modulation d'intensité et de phase de ces signaux optiques, ledit dispositif comprenant :
- un laser à blocage de modes permettant de récupérer un signal d'horloge représentant le rythme d'horloge des bits des signaux optiques à régénérer, et
- une structure interférométrique de modulation ayant un premier et un second bras interférométriques et permettant de moduler l'amplitude et la phase des signaux optiques par ledit signal d'horloge et comportant au moins un amplificateur optique à semi-conducteur disposé dans le premier bras interférométrique,
caractérisé en ce que le laser à blocage de modes est couplé audit premier bras interférométrique de manière que ledit amplificateur du premier bras interférométrique est un composant en commun du laser à blocage de modes et de ladite structure interférométrique.

Le dispositif selon l'invention peut en outre comprendre l'une ou plusieurs des caractéristiques suivantes :
- ledit amplificateur du premier bras est choisi de telle sorte que la modulation de son gain, provoquée via des effets de saturation par le signal optique à régénérer, déclenche un blocage de modes dudit laser à blocage de modes à une longueur d'onde située à l'intérieur de la bande d'émission de l'amplificateur du premier bras interférométrique,
- un second amplificateur optique à semi-conducteur est disposé dans le second bras interférométrique, et il comprend un second laser à blocage de modes permettant de récupérer un second signal optique d'horloge, ce second signal d'horloge représentant également le rythme d'horloge des bits des signaux optiques à régénérer et possédant une seconde longueur d'onde différente de la longueur d'onde du signal d'horloge du premier laser à blocage de modes, le second laser à blocage de modes étant couplé audit second bras interférométrique de manière que ledit amplificateur du second bras interférométrique est un composant en commun du second laser à blocage de modes et de ladite structure interférométrique,
- ledit second amplificateur optique à semi-conducteur du second bras interférométrique est sensiblement identique au premier amplificateur optique à semi-conducteur du premier bras interférométrique,
- ladite structure interférométrique est une structure du type Michelson et il comporte en outre un circulateur optique ayant un premier port recevant le signal optique à régénérer, un second port raccordé au port entrée/sortie interférométrique de la structure du type Michelson et un troisième port de sortie du signal optique régénéré,
- le laser à blocage de modes est un laser en anneau comprenant :
   - une fibre de récupération du signal d'horloge dont l'entrée est couplée à une fibre de sortie raccordée au troisième port dudit circulateur optique et dont la sortie est raccordée à des premiers moyens de couplage des signaux optiques d'horloge dans le premier bras de ladite structure interférométrique,
   - ledit premier bras interférométrique avec ledit premier amplificateur optique,
   - une fibre de raccordement de l'entrée/sortie interférométrique de la structure interférométrique au second port du circulateur optique, et
   - un filtre de sélection centré autour de la longueur d'onde des signaux optiques d'horloge et disposé dans ladite fibre de récupération ou dans lesdits moyens de couplage,
- le premier bras de ladite structure interférométrique présente une extrémité terminale qui est réfléchissante pour les signaux optiques à régénérer et au moins partiellement transmissible pour des signaux optiques à la longueur d'onde des signaux d'horloge récupérés, le laser à blocage de modes est un laser en anneau comprenant :
   - une fibre de récupération du signal d'horloge dont une extrémité est couplée à ladite extrémité terminale du premier bras et dont l'autre extrémité est raccordée à des premiers moyens de couplage des signaux optiques d'horloge dans le premier bras de ladite structure interférométrique,
   - ledit premier bras interférométrique avec ledit premier amplificateur optique et
   - un filtre de sélection centré autour de la longueur d'onde des signaux optiques d'horloge et disposé dans ladite fibre de récupération ou dans lesdits moyens de couplage,
- il comporte en outre des seconds moyens de couplage des signaux optiques d'horloge récupérés dans le second bras de la structure interférométrique,
- un isolateur optique est disposé dans ladite fibre de récupération pour imposer le sens de circulation des signaux d'horloge récupérés,
- un moyen de stockage temporel de signaux d'horloge est disposé dans ladite fibre de récupération pour lisser les différentes contributions spectrales des signaux optiques d'horloge récupérés,
- lesdits moyens de stockage comprennent une fibre optique de longueur prédéfinie,
- un amplificateur optique à semi-conducteur supplémentaire est disposé dans lesdits premiers moyens couplage,
- le laser à blocage de modes est un oscillateur laser à cavité résonante comprenant :
   - le premier bras de ladite structure interférométrique et son extrémité réfléchissante aussi bien pour les signaux optiques à régénérer que pour les signaux optiques d'horloge récupérés,
   - une branche latérale de ladite structure interférométrique dont une extrémité est couplée audit premier bras et dont l'autre extrémité est réfléchissante pour les signaux optiques d'horloge, et
   - un filtre de sélection centré autour de la longueur d'onde des signaux optiques d'horloge et disposé dans ladite branche latérale,
- ledit filtre de sélection est un réflecteur de Bragg,
- une zone de phase permettant d'ajuster la longueur optique de la cavité est prévue dans ladite branche latérale,
- un amplificateur optique à semi-conducteur supplémentaire est disposé dans ladite branche latérale,
- la structure interférométrique et le laser à blocage de modes sont intégrés sur un même substrat,
- ladite structure interférométrique est une-structure du type MACH-ZEHNDER,
- le laser à blocage de modes est un laser en anneau comprenant :
   - une fibre de récupération du signal d'horloge dont l'entrée est couplée à des premiers moyens de couplage permettant de prélever le signal d'horloge dudit premier bras et dont la sortie est raccordée à des seconds moyens de couplage pour introduire des signaux optiques d'horloge circulant dans la fibre de récupération dans le premier bras,
   - un isolateur optique pour imposer le sens de propagation des signaux d'horloge récupérés, et
   - un filtre de sélection centré autour de la longueur d'onde des signaux optiques d'horloge,
- le sens de propagation des signaux d'horloge imposé par l'isolateur optique est un sens contre-propagatif par rapport aux signaux à régénérer,
- le laser à blocage de modes est un oscillateur laser à cavité résonante comprenant :
   - une première branche latérale de ladite structure interférométrique dont une extrémité est totalement réfléchissante pour les signaux optiques d'horloge et dont l'autre extrémité est couplée audit premier bras,
   - ledit premier bras de ladite structure interférométrique définissant la partie centrale de la cavité, et
   - une seconde branche latérale dont une extrémité est couplée audit premier bras et dont l'autre extrémité est totalement réfléchissante pour les signaux optiques d'horloge.
- ladite structure interférométrique et le laser à blocage de modes sont réalisés sur un même substrat comme composants intégrés,
- il comporte une fibre couplant une partie de la puissance des signaux optiques d'horloge régénérés dans le second bras de ladite structure interférométrique,
- ladite structure interférométrique est un composant intégré.

D'autres caractéristiques et avantages de la présente invention ressortiront de la description suivante, donnée à titre d'exemple, sans caractère limitatif, en regard des dessins annexés sur lesquels :
- la figure 1 est un schéma synoptique d'un premier mode de réalisation du dispositif selon l'invention,
- la figure 2 est un schéma synoptique d'une première variante du mode de réalisation de la figure 1,
- la figure 3 est un schéma synoptique d'une seconde variante du mode de réalisation de la figure 1,
- la figure 4 est un schéma synoptique d'une troisième variante du mode de réalisation de la figure 1,
- la figure 5 est un schéma synoptique d'un second mode de réalisation du dispositif selon l'invention,
- la figure 6 est un schéma synoptique d'une variante du second mode de réalisation de la figure 5, et
- la figure 7 est un schéma synoptique d'un développement du dispositif de la figure 6.

De manière générale pour toute la description, les éléments identiques sur les diverses figures portent les mêmes numéros de référence.

En outre, on a signalé sur les figures le sens de propagation des signaux optiques à régénérer et régénérés par des flèches pleines (« 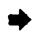 »), alors que le sens de propagation des signaux d'horloge récupérés est indiqué par des flèches simples « → »).

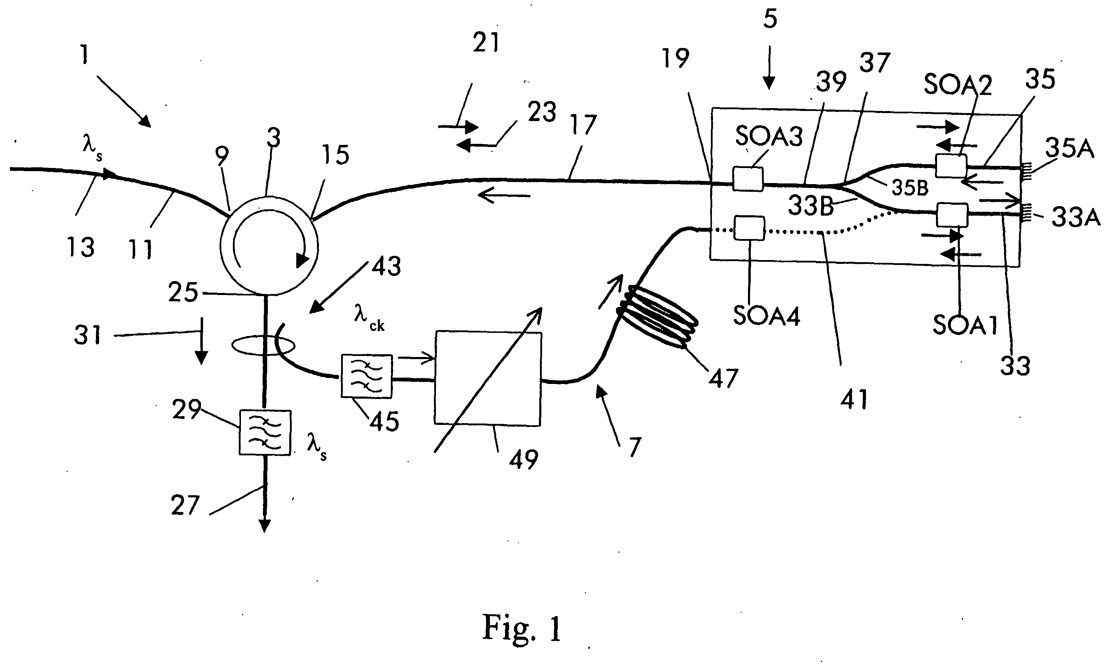

La figure 1 montre un schéma synoptique d'un premier mode de réalisation d'un dispositif 1 de régénération de signaux optiques par une modulation d'intensité et de phase.

Ce dispositif 1 comprend un circulateur optique 3, une structure interférométrique 5 et une ligne 7 de récupération d'un signal d'horloge.

Pour le présent mode de réalisation, le circulateur optique 3 est pour ce mode de réalisation un circulateur à trois ports. Le premier port 9 est raccordée à une fibre d'entrée 11 et reçoit de cette fibre 11 un signal optique à régénérer de longueur d'onde λ₃. Ceci est aussi indiqué par la flèche 13 montrant le sens de propagation des signaux optiques à régénérer dans la fibre d'entrée 11.

Le second port 15 du circulateur optique 3 est raccordé par une fibre 17 au port 19 d'entrée/ sortie de la structure interférométrique 5.

La flèche 21 située au-dessus de la fibre 17 indique le sens de propagation des signaux à régénérer qui ont été transférés dans le circulateur 3 depuis le port 9 de celui-ci au port 15. La flèche 23 indique le sens de propagation des signaux régénérés en sortie de la structure interférométrique 5. Ces signaux régénérés sont ensuite transférés depuis le port 15 au port 25 du circulateur 3. Ce port 25 est raccordé à une fibre 27 de sortie dans laquelle est disposé un filtre 29 centré autour de la longueur d'onde λₛ des signaux régénérés, le sens de propagation des signaux régénérés étant indiqué par la flèche 31.

La structure interférométrique 5 de la figure 1 est une structure du type Michelson. Il s'agit de préférence d'un composant optique intégré avec des guides d'onde de lumière intégré sur un même substrat semi-conducteur.

Cette structure interférométrique 5 comprend un premier 33 et un second 35 bras interférométrique. Chacun des deux bras 33 et 35 possède une extrémité terminale réfléchissante, respectivement numérotées 33A et 35A, et une extrémité, respectivement numérotées 33B et 35B, couplée à une branche associée d'un diviseur 37 en « Y », le tronc 39 du diviseur 37 étant raccordée au port d'entrée/sortie 19 de la structure interférométrique 5.

Un premier amplificateur optique à semi-conducteur SOA1 est disposé dans le premier bras 33 et, de préférence, un second amplificateur optique à semi-conducteur SOA2, avantageusement identique à l'amplificateur SOA1, est disposé dans le second bras 35.

Par ailleurs, un amplificateur optique à semi-conducteur auxiliaire SOA3 est disposé dans le tronc 39 du diviseur 37.

De plus, pour la récupération de signaux d'horloge, le dispositif de régénération 1 comprend un laser à blocage de modes permettant de récupérer un signal d'horloge représentant le rythme d'horloge des bits des signaux optiques à régénérer.

Sur la figure 1, ce laser à blocage de modes est un laser en anneau comprenant la ligne 7 de récupération formée par une fibre optique, des premiers moyens 41 de couplage pour coupler le signal d'horloge récupéré dans le premier bras 33 de la structure interférométrique 5 (les moyens 41 de couplage sont également réalisés sous forme d'un guide d'onde), du tronc 39 du diviseur 37, de la fibre 17 de raccordement du port entrée/sortie 19 de la structure interférométrique au port 15 du circulateur optique 3, la partie du circulateur optique faisant transférer les signaux optiques du port 15 au port 25 et la partie de la fibre 27 entre le port 25 du circulateur et le point de couplage avec la ligne 7 de récupération.

On comprend donc qu'une extrémité 43 de la ligne 7 de récupération est couplée à la fibre 27 de sortie afin que les signaux d'horloge transférés depuis le port 15 vers le port 25 soient récupérés dans cette ligne 7.

Par ailleurs, un filtre 45 centré autour de la longueur d'onde des signaux d'horloge est disposé dans la ligne 7 de récupération. Ce filtre 45 a pour fonction d'imposer la longueur d'onde λ_{ck} à laquelle le laser en anneau doit fonctionner. Judicieusement comme on va le voir ci-après, cette longueur d'onde de filtrage λ_{ck} est choisie de manière qu'elle se trouve à l'intérieur de la bande d'émission (également appelée bande d 'amplification) du premier amplificateur optique à semi-conducteur SOA1, de sorte que ce dernier amplifie non seulement des signaux à régénérer à la longueur d'onde λₛ, mais aussi ceux à la longueur d'onde λ_{ck}. De plus, on choisit l'amplificateur SOA1 de manière que la modulation de son gain, provoquée via des effets de saturation par le signal optique à régénérer déclenche un blocage de modes du laser à blocage de modes à la longueur d'onde λ_{ck}.

On comprend donc que l'amplificateur SOA1 est un composant en commun du laser à blocage de modes et de ladite structure interférométrique remplissant plusieurs fonctions : pour la partie interférométrique, le SOA1 est impliquée dans la régénération des signaux optiques et pour la partie laser en anneau, le SOA1 est un élément amplificateur assurant en même temps le blocage des modes du laser.

L'amplificateur auxiliaire SOA3 qui agit également sur les signaux optiques à régénérer et sur les signaux optiques d'horloge ne joue que le rôle d'un simple amplificateur d'une part pour des signaux à régénérer et d'autre part pour des signaux optiques d'horloge.

De façon optionnelle et pour permettre d'ajuster le gain d'amplification des signaux optiques d'horloge dans le laser en anneau, on prévoit de plus un amplificateur optique à semi-conducteur SOA4 supplémentaire disposé dans les moyens 41 de couplage. Bien entendu, un tel amplificateur supplémentaire peut également être prévu dans la ligne 7 de récupération.

En outre, on prévoit dans la ligne 7 un moyen 47 de stockage temporel de signaux d'horloge. Ce moyen 47 de stockage comprend de préférence une fibre optique de longueur prédéfinie et permet de lisser les différentes contributions spectrales des signaux optiques d'horloge récupérés. A titre d'exemple, pour des signaux avec un débit de 40Gbit/s, on choisit une longueur de fibre de 5m enroulé par exemple sur une bobine stabilisée en température pour stocker ainsi des signaux optiques correspondant à environ 1000 bits.

Enfin, une ligne optique à retard ajustable 49 disposée dans la ligne de récupération 7 entre le filtre 45 et les moyens 47 de stockage sert à ajuster la longueur optique du laser en anneau.

Le dispositif de régénération selon l'invention fonctionne de la manière suivante.

Les signaux à régénérer de longueur d'onde λₛ sont introduits dans le dispositif 1 selon l'invention par la fibre 11, admis au port 9 du circulateur 3 et transférés vers le port 15. De là, ils sont acheminés par la fibre 17 au port entrée/ sortie 19 de la structure interférométrique 5. Puis, dans la structure interférométrique 5, les signaux à régénérer sont divisés dans le diviseur 37 pour être couplés dans le premier 33 et le second 35 bras interférométriques.

Dans le premier bras interférométrique 35, la modulation amplitude / phase des signaux à régénérer est pilotée par les signaux d'horloge récupérés qui circulent dans le laser en anneau décrit ci-dessus, ce qui va induire après réflexion, via des effets interférométriques avec les signaux réfléchis provenant du second bras 35 dans le tronc du diviseur en « Y » 37, la régénération « 3R » des signaux en entrée de la structure interférométrique.

Ensuite, les signaux ainsi régénérés circulent dans la fibre 17 vers le port 15 du circulateur 3, sont transférés vers le port 25, et sortent, après un ultime filtrage dans le filtre 29 par la fibre 27 de sortie.

Pendant ce temps, les signaux d'horloge récupérés circulent dans le laser en anneau et pilotent la régénération des signaux optique à la longueur d'onde λₛ comme décrit ci-dessus.

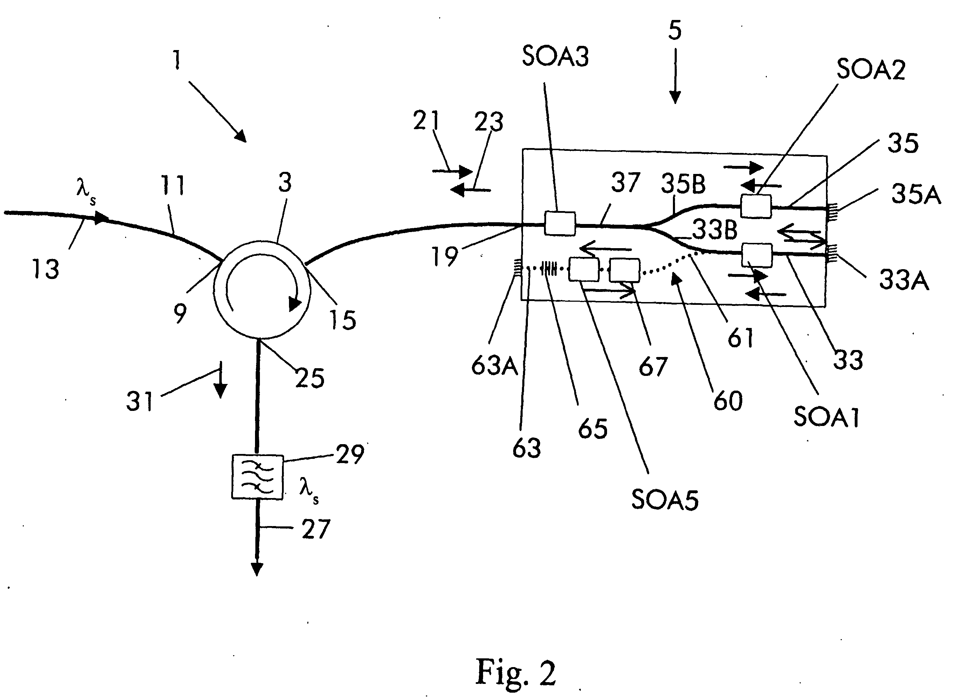

La figure 2 montre un schéma synoptique d'une première variante du régénérateur de la figure 1.

Le régénérateur de la figure 2 se distingue de celui de la figure 1 essentiellement par le fait que le laser à blocage de modes est un oscillateur laser à cavité résonante ou laser linéaire.

Cet oscillateur à cavité résonante comprend le premier bras 33 de ladite structure interférométrique et son extrémité réfléchissante 33A et une branche latérale 60 de ladite structure interférométrique 5 dont une extrémité 61 est couplée au premier bras 33 et dont l'autre extrémité 63 se termine en une surface réfléchissante 63 A pour les signaux optiques d'horloge.

Dans la branche latérale sont disposés un filtre 65 de sélection centré autour la longueur d'onde λ_{cl} des signaux optiques d'horloge à récupérer et réalisé de préférence sous la forme d'un filtre de Bragg, et, de façon optionnelle, un amplificateur optique à semi-conducteur SOA5 supplémentaire et une zone de phase 67 permettant d'ajuster la longueur optique de la cavité laser.

Comme cela est indiqué schématiquement sur la figure 2, la structure interférométrique et le laser à blocage de modes sont intégrés sur un même substrat, ce qui présente un grand avantage non seulement pour la fabrication des régénérateurs selon l'invention, mais aussi pour sa stabilité en régime de fonctionnement. De plus, ce composant intégré est moins sensible à l'altération avec le temps.

A part les différences propres à la structure de leur laser à blocage de modes, les régénérateurs des figures 1 et 2 fonctionnent de façon similaire.

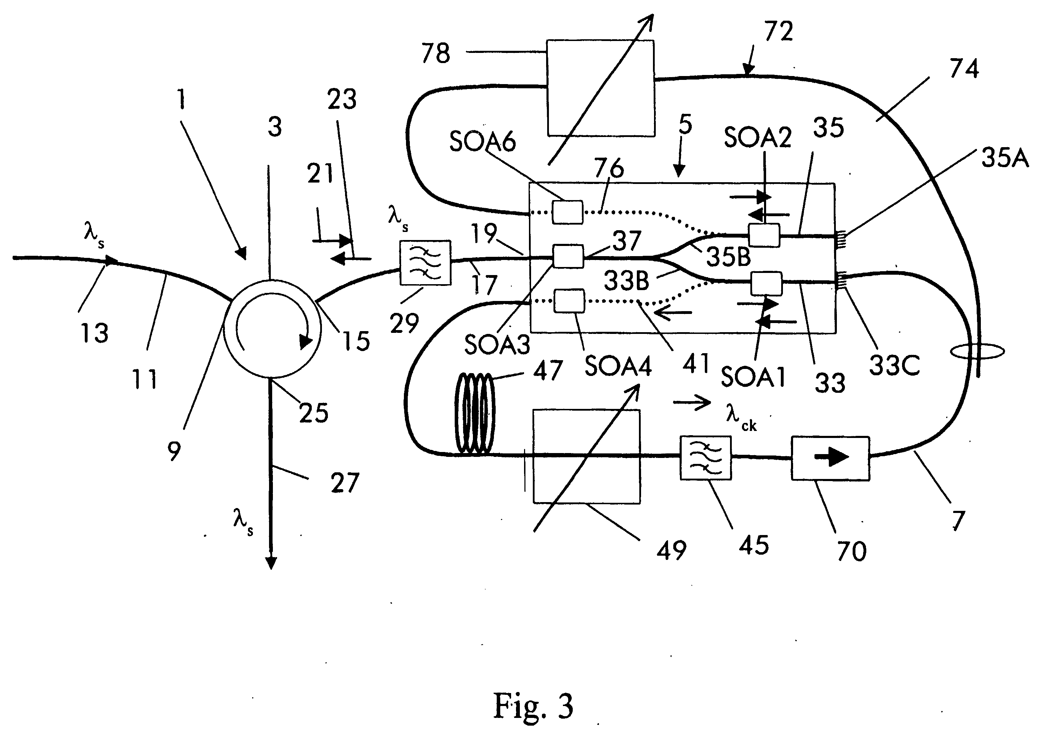

La figure 3 est un schéma synoptique d'une seconde variante du régénérateur de la figure 1.

Cette variante est structurellement très proche du régénérateur de la figure 1 et se distingue notamment par une autre configuration du laser en anneau ainsi que par le fait que les signaux d'horloge récupérés sont utilisés pour la modulation des signaux optiques dans les deux bras 33 et 35 de la structure interférométrique 5.

Comme pour le mode de réalisation de la figure 1, le laser à blocage de modes est un laser en anneau.

Selon un premier aspect relatif à la configuration du laser en anneau, celui-ci comprend la fibre de récupération 7 du signal d'horloge dont une extrémité est couplée à l'extrémité terminale 33C du premier bras 33 et dont l'autre extrémité est raccordée aux moyens 41 de couplage des signaux optiques d'horloge dans le premier bras 33.

Pour assurer le couplage des signaux optiques d'horloge dans premier bras 33 de la structure interférométrique 5 sans pour autant dégrader les performances interférométriques du Michelson, l'extrémité terminale 33C est réfléchissante pour les signaux optiques à régénérer à la longueur d'onde λₛ, mais au moins partiellement, de préférence presque totalement transmissible pour des signaux optiques à la longueur d'onde λ_{cl} des signaux d'horloge récupérés.

Comme pour le mode de réalisation de la figure 1, un filtre 45, des moyens 47 de stockage et une ligne optique à retard ajustable 49 sont disposés dans la ligne 7 de récupération. Ces éléments assurent bien entendu la même fonction que dans la mode de réalisation de la figure 1.

De plus, un isolateur optique 70 est disposé dans la ligne 7 de récupération pour imposer le sens de circulation des signaux d'horloge récupérés.

Par ailleurs, on note sur la figure 3 la présence, bien sûr optionnelle, d'un amplificateur optique à semi-conducteur supplémentaire SOA4 disposé dans les moyens couplage 41 réalisés sous la forme d'un guide d'onde.

Le laser en anneau de la figure 3 fonctionne et interagit avec l'interféromètre du type Michelson pour la régénération « 3R » de manière similaire que le laser en anneau de la figure 1.

Avantageusement, le filtre 29 de sortie est, pour cette variante, placé dans la fibre 17 de raccordement du circulateur 3 à la structure interférométrique 5 et non dans la fibre de sortie 27.

Selon le second aspect de cette variante de l'invention visant à soumettre de plus les signaux à régénérer dans le second bras 35 à l'action des signaux d'horloge, le régénérateur 1 selon l'invention comprend en outre des seconds moyens de couplage 72 des signaux optiques d'horloge récupérés dans le second bras 35 de la structure interférométrique 5.

Comme on le voit sur la figure 3, ces seconds moyens de couplage 72 comprennent d'une part une fibre 74 dont une extrémité est couplée à la fibre 7 de récupération pour prélever une partie des signaux d'horloge récupérés, et d'autre part une seconde branche latérale 76 de la structure interférométrique 5, réalisée sous la forme d'un guide d'onde, à laquelle est couplée l'autre extrémité de la fibre 74 et qui introduit par couplage, des signaux optiques d'horloge dans le second bras 35.

Avantageusement, une ligne à retard ajustable 78 est située dans la fibre 74 et un amplificateur optique à semi-conducteur SOA6 optionnel est disposé dans la branche latérale 76.

Grâce à cette configuration dans laquelle les signaux d'horloge récupérés agissent dans les deux bras 33 et 35 de la structure interférométrique 5, la fonction de trille (également appelé « chirp » en anglais) des signaux à régénérés peut être ajustée.

Sinon, le fonctionnement de la variante de la figure 3 est analogue à celle représentée à la figure 1.

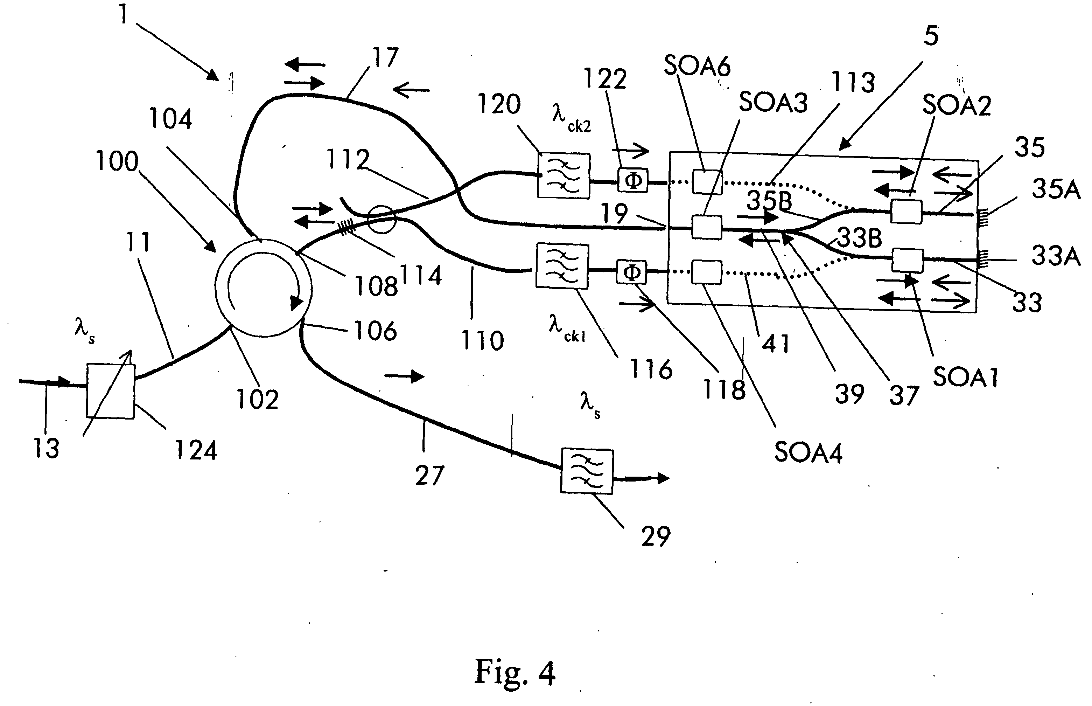

La troisième variante représentée sur un schéma synoptique sur la figure 4 permet également d'ajuster le « chirp » des signaux optiques à régénérer et se distingue de la seconde variante de la figure 3 notamment par l'utilisation de deux lasers à blocage de mode indépendants, chacun fonctionnant à sa propre longueur d'onde et apte à fonctionner avec un bras associé de la structure interférométrique.

Sur la figure 4, les deux lasers à blocage de modes sont des lasers en anneau. Pour pouvoir réaliser ces deux lasers en anneau pour la récupération des signaux d'horloge, on utilise un circulateur optique 100 à quatre ports, dont les premier 102, second 104 et dernier 106 ports ont la même fonction que les ports 9, 15 et 25 respectifs du circulateur 3 de la figure 1.

Le port supplémentaire 108 situé entre le port 104 et le port 106 est relié directement par une fibre 110 aux moyens de couplage 41 de la structure interférométrique 5 et indirectement, par une fibre 112 couplée à la fibre 110 à des seconds moyens de couplage 113 de la structure interférométrique 5.

A proximité du port 108 est disposé dans la fibre 110 un réflecteur de Bragg 114 (RIFBG-filter pour « reflector integrated Bragg filter » en anglais). Il s'agit d'un réseau de Bragg inscrit dans la fibre 110 et dont la constante du réseau est choisie de manière que des signaux optiques à la longueur d'onde λ_{S} du signal à régénérer sont réfléchis, alors que les signaux optiques à la longueur d'onde des signaux d'horloge passent ce filtre sensiblement sans atténuation. Ceci est nécessaire pour que les signaux régénérés venant du port 104 et transférés vers le port 108 sont renvoyés directement vers ce même port 108 pour être finalement transférés vers le port 106 de sortie.

Par ailleurs, dans chaque fibre 110, 112 sont respectivement disposés un filtre 116 et 120 ainsi qu'une ligne à retard réglable 118 et 122. Les filtres 116 et 120 ont pour leur laser en anneau respectif la même fonction que le filtre 45 du régénérateur de la figure 1. C'est-à-dire, il s'agit de filtres centrés autour de la longueur d'onde des signaux d'horloge respectifs λ_{CK1} et λ_{CK2} pour imposer la longueur d'onde de fonctionnement du laser en anneau.

Les signaux optiques d'horloge récupérés à la longueur d'onde λ_{ck1} circulent dans le premier laser en anneau depuis le port 108 du circuloteur 100, dans la fibre 110 en passant par le filtre de Bragg 114 et le filtre 116 ainsi que la ligne à retard réglable 118 pour être introduit dans les premiers moyens de couplage 41 avec son amplificateur optique supplémentaire à semi-conducteur SOA4, puis dans le premier bras 33 de la structure interférométrique 5 avec son amplificateur optique à semi-conducteur SOA1. Ces signaux d'horloge à la longueur d'onde λ_{ck1} sont ensuite réfléchis à l'extrémité terminale 33A, repassent par l'amplificateur SOA1, sont couplés dans le tronc 39 du coupleur 37 en « Y » pour revenir finalement par la fibre 17 au port 104, puis au port 108 du circulateur 100.

Les signaux optiques d'horloge récupérés à la longueur d'onde λ_{ck2} circulent dans le second laser en anneau depuis le port 108 du circulateur 100, dans la fibre 110 en passant par le filtre de Bragg 114. Ils sont couplés dans la fibre 112 avec son filtre 120 ainsi que sa ligne à retard réglable 122 pour être introduit dans les seconds moyens de couplage 76 avec son amplificateur optique supplémentaire à semi-conducteur SOA6, puis dans le second bras 35 de la structure interférométrique 5 avec son amplificateur optique à semi-conducteur SOA2. Ces signaux d'horloge à la longueur d'onde λ_{ck2} sont ensuite réfléchis à l'extrémité terminale 35A. Bien entendu, le pouvoir réfléchissant des extrémités terminales 33A et 35 A est adapté aux longueurs d'onde respectives λ_{ck1} et λ_{ck2} qui sont différentes. Les signaux d'horloge à λ_{CK2} ainsi récupérés repassent ensuite par l'amplificateur SOA2, sont couplés dans le tronc 39 du coupleur 37 en « Y » pour revenir finalement par la fibre 17 au port 104, puis au port 108 du circulateur 100.

On comprend donc que dans la fibre 17 circulent des signaux optiques de trois longueurs d'ondes différentes : les signaux à régénérer et les signaux régénérés à la longueur d'onde λₛ, ainsi que les signaux optiques d'horloge récupérés aux longueurs d'ondes λ_{ck1} et λ_{ck2} respectives.

Selon les mêmes principes que ceux appliqués au régénérateur de la figure 1, les longueurs d'onde de filtrage λ_{ck1} et λ_{ck2} sont choisies de manière qu'elles se trouvent à l'intérieur de la bande d'émission des amplificateurs optiques à semi-conducteur SOA1 et SOA2.

Pour ce mode de réalisation, on voit donc que les amplificateurs SOA1 et SOA2 sont des composants en commun d'une part de la structure interférométrique et d'autre part des deux lasers à blocage de modes respectifs.

De façon optionnelle, une ligne à retard réglable 124 est disposée dans la fibre d'entrée 11.

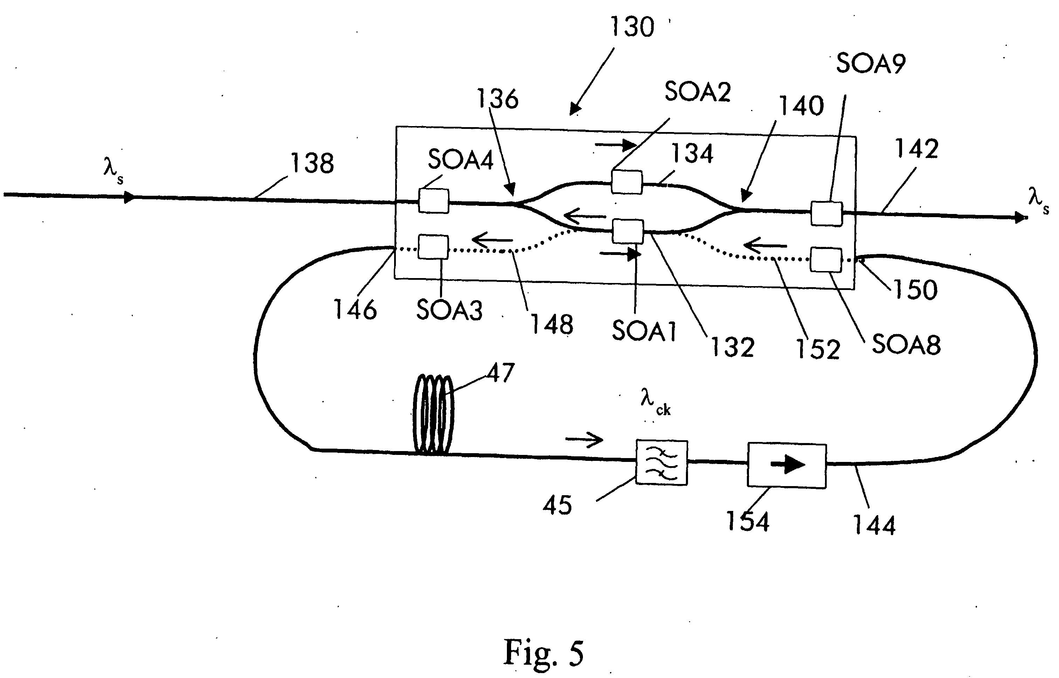

On se réfère maintenant à la figure 5 qui représente un second mode de réalisation du régénérateur selon l'invention.

Ce mode de réalisation diffère de celui représenté en plusieurs variantes sur les figures 1 à 4 essentiellement par le fait que la structure interférométrique est une structure 130 du type MACH-Zehnder.

Plus en détail, la structure interférométrique 130 du type Mach-Zehnder comprend un premier 132 et un second 134 bras interférométrique ayant respectivement un amplificateur optique à semi-conducteur SOA1 et SOA2. Les bras 132 et 134 sont raccordés d'une part par un premier coupleur en «Y» 136 à une fibre d'entrée 138 des signaux optiques à régénérer, et d'autre part par un second coupleur 140 à une fibre 142 de sortie des signaux optiques régénérés.

Pour assurer une régénération « 3R » conforme aux principes de fonctionnement du premier mode de réalisation des figures 1 à 4, le régénérateur de la figure 5 présente un laser à blocage de mode formé par un laser en anneau comprenant une fibre 144 de récupération du signal d'horloge dont l'entrée 146 est couplée à des premiers moyens de couplage 148 permettant de prélever le signal d'horloge du premier bras 132 et dont la sortie 150 est raccordée à des seconds moyens de couplage 152 pour introduire des signaux optiques d'horloge circulant dans la fibre de récupération 144 dans le premier bras 132.

Dans la fibre 144 sont disposés un isolateur optique 154 pour imposer le sens de propagation des signaux d'horloge récupérés, le filtre 45 de sélection centré autour de la longueur d'onde λ_{CK} des signaux optiques d'horloge et les moyens 47 de stockage temporel de signaux d'horloge.

De façon optionnelle, des amplificateurs optiques à semi-conducteur SOA3 et SOA8 sont disposés respectivement dans les moyens 148 et 152 de couplage.

De même, des amplificateurs optiques à semi-conducteur auxiliaires SOA4 et SOA9 sont respectivement disposés dans le tronc des coupleurs en « Y » 136 et 140.

Bien entendu, les divers bras 132, 134, les coupleurs 136, 140 et les moyens de couplage 148, 152 de la structure interférométrique 130 sont de préférence réalisés sous la forme de guide d'ondes sur un substrat commun.

En fonctionnement, les signaux à régénérer de longueur d'onde λₛ sont introduits dans le dispositif 1 selon l'invention par la fibre 138 et admis par la structure interférométrique 130 dans le tronc du coupleur 138. Puis, par le coupleur 136 en « Y », les signaux à régénérer sont divisés pour être couplés dans le premier 132 et le second 134 bras interférométriques.

Dans le premier bras interférométrique 132, la modulation amplitude / phase des signaux à régénérer est pilotée par les signaux d'horloge récupérés qui circulent dans le laser en anneau décrit ci-dessus, ce qui va induire, via des effets interférométriques avec les signaux provenant du second bras 134 dans le tronc du coupleur en « Y » 140, la régénération « 3R » des signaux en sortie de la structure interférométrique.

Ensuite, les signaux ainsi **régénérés** circulent dans la fibre de sortie 142.

Par précaution, on peut prévoir un filtre centré autour de la longueur d'onde des signaux à régénérer dans la fibre 142 afin d'éliminer d'éventuels signaux optiques parasites à la longueur d'onde λ_{ck}.

Pendant ce temps, les signaux d'horloge récupérés circulent dans le laser en anneau décrit ci-dessus et pilotent la régénération des signaux optique à la longueur d'onde λₛ comme cela a été décrit en relation avec le premier mode de réalisation présenté sur les figures 1 à 4.

Avantageusement, le sens de propagation des signaux d'horloge imposé par l'isolateur optique 154 est un sens contre-propagatif par rapport aux signaux à régénérer.

Toutefois, on peut envisager un sens co-propagatif, et dans ce cas, un filtre centré autour de λₛ dans la fibre de sortie 142 devient obligatoire.

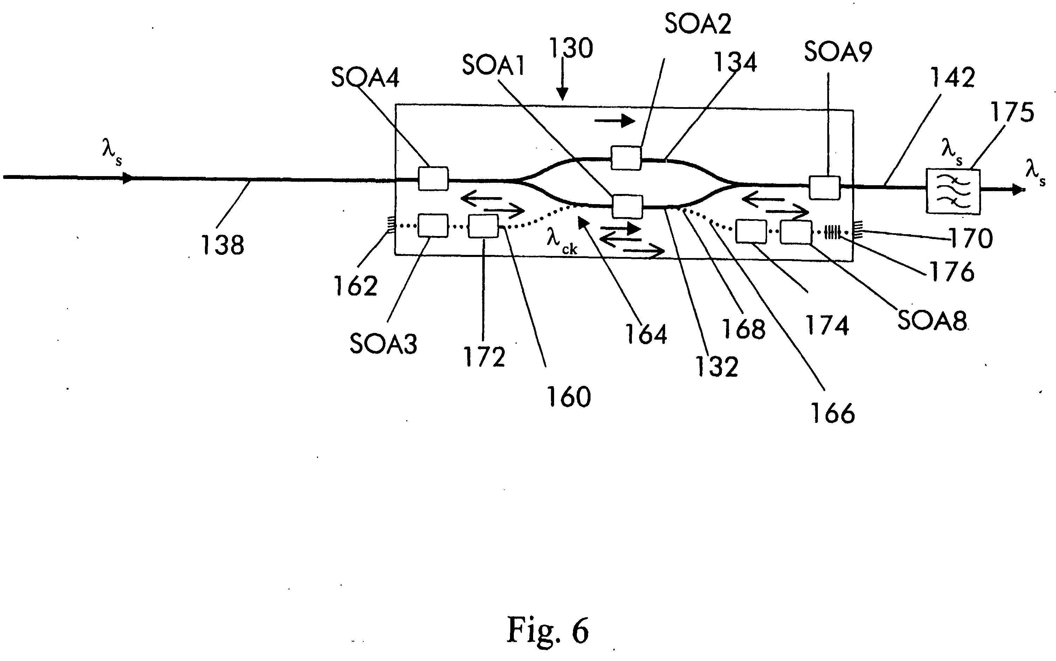

La figure 6 présente une variante du mode de réalisation de la figure 5.

Cette variante se distingue par le fait que le laser à blocage de modes est un oscillateur à cavité résonante et non un laser en anneau.

Ce laser à blocage de modes comprend une première branche latérale 160 réalisée sous forme d'un guide d'onde dont une extrémité 162 est totalement réfléchissante pour les signaux optiques d'horloge et dont l'autre extrémité 164 est couplée au premier bras interférométrique 132, ce premier bras 132 définissant la partie centrale de la cavité résonante, et une seconde branche latérale 166 réalisée sous forme de guide d'onde dont une extrémité 168 est couplée au premier bras 132 et dont l'autre extrémité 170 est totalement réfléchissante pour les signaux optiques d'horloge.

L'amplification des signaux d'horloge dans le laser est non seulement faite par l'amplificateur en commun SOA1, mais aussi par les amplificateurs supplémentaires SOA3 et SOA8 disposés respectivement dans la première branche 160 et dans la seconde branche 166.

Pour régler la longueur de la cavité, des zones de phase 172 et 174 sont respectivement disposées dans la première 160 et dans la seconde 166 branches latérales.

Comme le laser à cavité résonante de la 2, celui de la figure 6 dispose également d'un filtre 176 de sélection centré autour la longueur d'onde λ_{cl} des signaux optiques d'horloge à récupérer et réalisé de préférence sous la forme d'un filtre de Bragg inscrit dans le guide d'onde.

En outre, un filtre 29 centré autour de la longueur d'onde λₛ des signaux régénérés est disposé dans la fibre de sortie 142.

A part pour la structure du laser pour la récupération des signaux d'horloge, cette variante fonctionne de la même façon que le régénérateur représenté sur la figure 5.

On conçoit donc aisément que ladite structure interférométrique et le laser à blocage de modes sont réalisés sur un même substrat comme composants intégrés, ce qui confère au régénérateur une grande compacité et aussi une bonne fiabilité de fonctionnement.

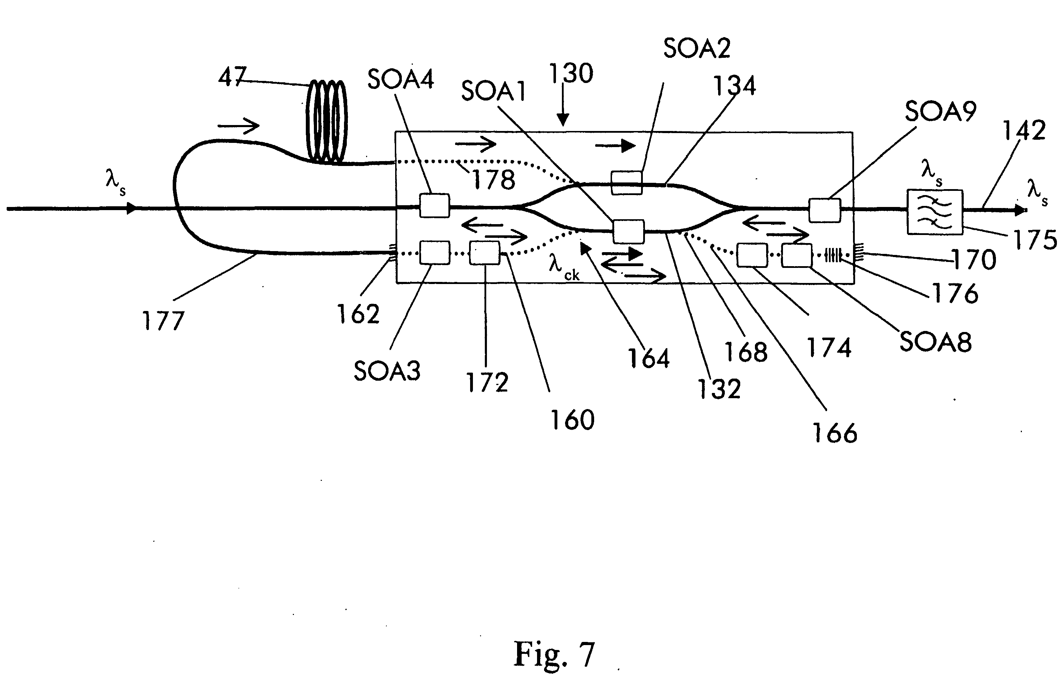

Enfin la figure 7 présente un développement avantageux du régénérateur de la figure 6, dans lequel l'extrémité 162 de la branche latérale 160 est partiellement transmissible pour les signaux d'horloge récupérés afin de permettre de coupler ces signaux d'horloge via une fibre 177, disposant de préférence de moyens de stockage 47 de signaux d'horloge, et des moyens de couplage 178 réalisés sous la forme d'un guide d'onde dans le second bras 134 de la structure interférométrique.

## Revendications

1. Dispositif de régénération de signaux optiques par une modulation d'intensité et de phase de ces signaux optiques, ledit dispositif comprenant :
- un laser à blocage de modes permettant de récupérer un signal d'horloge représentant le rythme d'horloge des bits des signaux optiques à régénérer, et
- une structure interférométrique (5 ; 130) de modulation ayant un premier (33 ; 132) et un second (35 ; 134) bras interférométriques et permettant de moduler l'amplitude et la phase des signaux optiques par ledit signal d'horloge et comportant au moins un amplificateur optique à semi-conducteur (SOA1) disposé dans le premier bras interférométrique (33 ; 132),
**caractérisé en ce que** le laser à blocage de modes est couplé audit premier bras interférométrique (33 ; 132) de manière que ledit amplificateur (SOA1) du premier bras interférométrique (33 ; 132) est un composant en commun du laser à blocage de modes et de ladite structure interférométrique (5; 130).

2. Dispositif selon la revendication 1, **caractérisé en ce que** ledit amplificateur (SOA1) du premier bras (33 ; 132) est choisi de telle sorte que la modulation de son gain, provoquée via des effets de saturation par le signal optique à régénérer, déclenche un blocage de modes dudit laser à blocage de modes à une longueur d'onde située à l'intérieur de la bande d'émission de l'amplificateur (SOA1) du premier bras interférométrique (33 ; 132).

3. Dispositif selon la revendication 1 ou 2, **caractérisé en ce qu'**un second amplificateur optique à semi-conducteur (SOA2) est disposé dans le second bras interférométrique (35 ; 134), et **en ce qu'**il comprend un second laser à blocage de modes permettant de récupérer un second signal optique d'horloge, ce second signal d'horloge représentant également le rythme d'horloge des bits des signaux optiques à régénérer et possédant une seconde longueur d'onde différente de la longueur d'onde du signal d'horloge du premier laser à blocage de modes, le second laser à blocage de modes étant couplé audit second bras interférométrique (35 ; 134) de manière que ledit amplificateur (SOA2) du second bras interférométrique (35 ; 134) est un composant en commun du second laser à blocage de modes et de ladite structure interférométrique (5 ; 130).

4. Dispositif selon la revendication 3, **caractérisé en ce que** ledit second amplificateur optique à semi-conducteur (SOA2) du second bras interférométrique (35 ; 134) est sensiblement identique au premier amplificateur optique à semi-conducteur (SOA1) du premier bras interférométrique (33 ; 132).

5. Dispositif selon l'une quelconque des revendications 1 à 4, **caractérisé en ce que** ladite structure interférométrique (5) est une structure du type Michelson et **en ce qu'**il comporte en outre un circulateur optique (3 ; 100) ayant un premier port (9 ; 102) recevant le signal optique à régénérer, un second port (15 ; 104) raccordé au port entrée/sortie interférométrique de la structure du type Michelson et un troisième port (25 ; 106) de sortie du signal optique régénéré.

6. Dispositif selon la revendication 5, **caractérisé en ce que** le laser à blocage de modes est un laser en anneau comprenant :
- une fibre de récupération (7) du signal d'horloge dont l'entrée est couplée à une fibre de sortie (27) raccordée au troisième port (35) dudit circulateur optique (3) et dont la sortie est raccordée à des premiers moyens de couplage (41) des signaux optiques d'horloge dans le premier bras (33) de ladite structure interférométrique (5),
- ledit premier bras interférométrique (33) avec ledit premier amplificateur optique (SOA1),
- une fibre de raccordement (17) de l'entrée/sortie interférométrique de la structure interférométrique (5) au second port (15) du circulateur optique (3), et
- un filtre de sélection (45) centré autour de la longueur d'onde des signaux optiques d'horloge et disposé dans ladite fibre de récupération (7) ou dans lesdits premiers moyens de couplage (41 ).

7. Dispositif selon la revendication 5, **caractérisé en ce que** le premier bras (33) de ladite structure interférométrique (5) présente une extrémité terminale (33C) qui est réfléchissante pour les signaux optiques à régénérer et au moins partiellement transmissible pour des signaux optiques à la longueur d'onde des signaux d'horloge récupérés, le laser à blocage de modes est un laser en anneau comprenant :
- une fibre de récupération (7) du signal d'horloge dont une extrémité est couplée à ladite extrémité terminale (33C) du premier bras (33) et dont l'autre extrémité est raccordée à des premiers moyens de couplage (41) des signaux optiques d'horloge dans le premier bras (33) de ladite structure interférométrique (5),
- ledit premier bras interférométrique (33) avec ledit premier amplificateur optique (SOA1) et
- un filtre de sélection (45) centré autour de la longueur d'onde des signaux optiques d'horloge et disposé dans ladite fibre de récupération (7) ou dans lesdits premiers moyens de couplage (41).

8. Dispositif selon l'une quelconque des revendications 5 à 7, **caractérisé en ce qu'**il comporte en outre des seconds moyens de couplage (72) des signaux optiques d'horloge récupérés dans le second bras (35) de la structure interférométrique (5).

9. Dispositif selon l'une quelconque des revendications 6 à 8, **caractérisé en ce qu'**un isolateur optique (70) est disposé dans ladite fibre de récupération (7) pour imposer le sens de circulation des signaux d'horloge récupérés.

10. Dispositif selon l'une quelconque des revendications 6 à 9, **caractérisé en ce qu'**un moyen de stockage temporel (47) des signaux d'horloge est disposé dans ladite fibre de récupération (7) pour lisser les différentes contributions spectrales des signaux optiques d'horloge récupérés.

11. Dispositif selon la revendication 10, **caractérisé en ce que** lesdits moyens de stockage (47) comprennent une fibre optique de longueur prédéfinie.

12. Dispositif selon l'une quelconque des revendications 6 à 11, **caractérisé en ce qu'**un amplificateur optique à semi-conducteur supplémentaire (SOA4) est disposé dans lesdits premiers moyens couplage (41).

13. Dispositif selon la revendication 5, **caractérisé en ce que** le laser à blocage de modes est un oscillateur laser à cavité résonante comprenant :
- le premier bras (33) de ladite structure interférométrique (5) et son extrémité (33A) réfléchissante aussi bien pour les signaux optiques à régénérer que pour les signaux optiques d'horloge récupérés,
- une branche latérale (60) de ladite structure interférométrique dont une extrémité (61) est couplée audit premier bras (33) et dont l'autre extrémité (63) est réfléchissante pour les signaux optiques d'horloge, et
- un filtre de sélection (65) centré autour de la longueur d'onde des signaux optiques d'horloge et disposé dans ladite branche latérale (60).

14. Dispositif selon la revendication 13, **caractérisé en ce que** ledit filtre de sélection (65) est un réflecteur de Bragg.

15. Dispositif selon la revendication 13 ou 14, **caractérisé en ce qu'**une zone de phase (67) permettant d'ajuster la longueur optique de la cavité est prévue dans ladite branche latérale (60).

16. Dispositif selon l'une quelconque des revendications 13 à 15, **caractérisé en ce qu'**un amplificateur optique à semi-conducteur supplémentaire (SOA5) est disposé dans ladite branche latérale (60).

17. Dispositif selon l'une quelconque des revendications 13 à 16, **caractérisé en ce que** la structure interférométrique (5) et le laser à blocage de modes sont intégrés sur le même substrat.

18. Dispositif selon l'une quelconque des revendications 1 à 4, **caractérisé en ce que** ladite structure interférométrique est une structure du type MACH-ZEHNDER.

19. Dispositif selon la revendication 18, **caractérisé en ce que** le laser à blocage de modes est un laser en anneau comprenant :
- une fibre de récupération (144) du signal d'horloge dont l'entrée est couplée à des premiers moyens de couplage (148) permettant de prélever le signal d'horloge dudit premier bras (132) et dont la sortie est raccordée à des seconds moyens de couplage (152) pour introduire des signaux optiques d'horloge circulant dans la fibre de récupération (144) dans le premier bras (132),
- un isolateur optique (154) pour imposer le sens de propagation des signaux d'horloge récupérés, et
- un filtre de sélection (45) centré autour de la longueur d'onde des signaux optiques d'horloge.

20. Dispositif selon la revendication 19, **caractérisé en ce que** le sens de propagation des signaux d'horloge imposé par l'isolateur optique est un sens contre-propagatif par rapport aux signaux à régénérer.

21. Dispositif selon la revendication 18, caractérisé en ce le laser à blocage de modes est un oscillateur laser à cavité résonante comprenant :
- une première branche latérale (160) de ladite structure interférométrique (130) dont une extrémité (162) est totalement réfléchissante pour les signaux optiques d'horloge et dont l'autre extrémité (164) est couplée audit premier bras (132),
- ledit premier bras (132) de ladite structure interférométrique (130) définissant la partie centrale de la cavité, et
- une seconde branche latérale (166) dont une extrémité (168) est couplée audit premier bras (132) et dont l'autre extrémité (170) est totalement réfléchissante pour les signaux optiques d'horloge.

22. Dispositif selon la revendication 21, **caractérisé en ce que** ladite structure interférométrique (130) et le laser à blocage de modes sont réalisés sur un même substrat comme composants intégrés.

23. Dispositif selon la revendication 21 ou 22, **caractérisé en ce qu'**il comporte une fibre (176) couplant une partie de la puissance des signaux optiques d'horloge régénérés dans le second bras (134) de ladite structure interférométrique (130).

24. Dispositif selon l'une quelconque des revendications précédentes, **caractérisé en ce que** ladite structure interférométrique (5 ; 130) est un composant intégré.

## Claims

1. A device for regenerating optical signals by intensity modulation and phase modulation of the optical signals, said device including:
- a mode locking laser for recovering a clock signal representing the clock of the bits of the optical signals to be regenerated, and
- a modulation interferometer structure (5; 130) having a first interferometer arm (33; 132) and a second interferometer arm (35; 134), enabling amplitude modulation and phase modulation of optical signals by said clock signal, and including a semiconductor amplifier (SOA1) in the first interferometer arm (33; 132),
**characterized in that** the mode locking laser is coupled to said first interferometer arm (33; 132) so that said amplifier (SOA1) of the first interferometer arm (33; 132) is a common component of the mode locking laser and said interferometer structure (5; 130).

2. A device according to claim 1, **characterized in that** said amplifier (SOA1) of the first arm (33; 132) is chosen so that the modulation of its gain caused by the effects of saturation by the optical signals to be regenerated triggers mode locking of said mode locking laser at a wavelength inside the emission band of the amplifier (SOA1) of the first interferometer arm (33; 132).

3. A device according to claim 1 or claim 2, **characterized in that** there is a second amplifier (SOA2) in the second interferometer arm (35; 134) and **in that** it includes a second mode locking laser for recovering a second optical clock signal also representing the clock of the bits of the optical signals to be regenerated and having a second wavelength different from the wavelength of the clock signal of the first mode locking laser, the second mode locking laser being coupled to said second interferometer arm (35; 134) so that said amplifier (SOA2) of the second interferometer arm (35; 134) is a common component of the second mode locking laser and said interferometer structure (5; 130).

4. A device according to claim 3, **characterized in that** said second semiconductor optical amplifier (SOA2) of the second interferometer arm (35; 134) is substantially identical to the first semiconductor optical amplifier (SOA1) of the first interferometer arm (33; 132).

5. A device according to any one of claims 1 to 4, **characterized in that** said interferometer structure (5) is a Michelson structure and **in that** it further includes an optical circulator (3; 100) having a first port (9; 102) receiving the optical signals to be regenerated, a second port (15; 104) connected to the interferometer input/output port of the Michelson structure, and a third port (25; 106) which is an output port for the regenerated optical signals.

6. A device according to claim 5, **characterized in that** the mode locking laser is a ring laser including:
- a fiber (7) for recovering the clock signal whose input is coupled to an output fiber (27) connected to the third port (35) of said optical circulator (3) and whose output is connected to first coupling means (41) for coupling optical clock signals into the first arm (33) of said interferometer structure (5),
- said first interferometer arm (33) with said first optical amplifier (SOA1),
- a connecting fiber (17) for connecting the interferometer input/output of the interferometer structure (5) to the second port (15) to the optical circulator (3), and
- a selector filter (45) whose center wavelength is the wavelength of the optical clock signals, disposed in said recovery fiber (7) or in said first coupling means (41).

7. A device according to claim 5, **characterized in that** the first arm (33) of said interferometer structure (5) has an end (33C) which is reflective for the optical signals to be regenerated and at least partially transparent for optical signals at the wavelength of the recovered clock signals, and **in that** the mode locking laser is a ring laser including:
- a fiber (7) for recovering the clock signal, one end of which is coupled to said end (33C) of the first arm (33) and whose other end is connected to first coupling means (41) for coupling optical clock signals into the first arm (33) of said interferometer structure (5),
- said first interferometer arm (33) with said first optical amplifier (SOA1), and
- a selector filter (45) whose center wavelength is the wavelength of the optical clock signals, disposed in said recovery fiber (7) or in said first coupling means (41).

8. A device according to any one of claims 5 to 7, **characterized in that** it further includes second coupling means (72) for coupling recovered optical clock signals into the second arm (35) of the interferometer structure (5).

9. A device according to any one of claims 6 to 8, **characterized in that** there is an optical isolator (70) in said recovery fiber (7) to impose the direction of propagation of the recovered clock signals.

10. A device according to any one of claims 6 to 9, **characterized in that** there are means (47) for time storage of the clock signals in said recovery fiber (7) to smooth the various spectral contributions of the recovered optical clock signals.

11. A device according to claim 10, **characterized in that** said storage means (47) include an optical fiber of predefined length.

12. A device according to any one of claims 6 to 11, **characterized in that** there is an additional semiconductor optical amplifier (SOA4) in said first coupling means (41).

13. A device according to claim 5, **characterized in that** the mode locking laser is a resonant cavity laser oscillator including:
- the first arm (33) of said interferometer structure (5) and its end (33A), which is reflective for the optical signals to be regenerated and for the recovered optical clock signals,
- a lateral branch (60) of said interferometer structure, one end (61) of which is coupled to said first arm (33) and whose other end (63) is reflective for the optical clock signals, and
- a selector filter (65) in said lateral branch (60), whose center wavelength is the wavelength of the optical clock signals.

14. A device according to claim 13, **characterized in that** said selector filter (65) is a Bragg reflector.

15. A device according to claim 13 or claim 14, **characterized in that** there is a phase area (67) in said lateral branch (60) for adjusting the optical length of the cavity.

16. A device according to any one of claims 13 to 16, **characterized in that** there is an additional semiconductor optical amplifier (SOA5) in said lateral branch (60).

17. A device according to any one of claims 13 to 16, **characterized in that** the interferometer structure (5) and the mode locking laser are integrated on the same substrate.

18. A device according to any one of claims 1 to 4, **characterized in that** said interferometer structure is a Mach-Zehnder structure.

19. A device according to claim 18, **characterized in that** said mode locking laser is a ring laser including:
- a fiber (144) for recovering the clock signal, whose input is coupled to first coupling means (148) for sampling the clock signal from said first arm (132) and whose output is connected to second coupling means (152) for feeding optical clock signals propagating in the recovery fiber (144) into the first arm (132),
- an optical isolator (154) for imposing the direction of propagation of the recovered clock signals, and
- a selector filter (45) whose center wavelength is the wavelength of the optical clock signals.

20. A device according to claim 19, **characterized in that** the direction of propagation of the clock signals imposed by the optical isolator is a contrapropagating direction relative to the signals to be regenerated.

21. A device according to claim 18, **characterized in that** the mode locking laser is a resonant cavity laser oscillator including:
- a first lateral branch (160) of said interferometer structure (130), one end (162) of which is totally reflective for the optical clock signals and whose other end (164) is coupled to said first arm (132),
- said first arm (132) of said interferometer structure (130), defining the central part of the cavity, and
- a second lateral branch (166), one end (168) of which is coupled to said first arm (132) and whose other end (170) is totally reflective for the optical clock signals.

22. A device according to claim 21, **characterized in that** said interferometer structure (130) and the mode locking laser are implemented as integrated components on the same substrate.

23. A device according to claim 21 or claim 22, **characterized in that** it includes a fiber (170) for coupling a part of the power of the regenerated optical clock signals into the second arm (134) of said interferometer structure (130).

24. A device according to any preceding claim, **characterized in that** said interferometer structure (5; 130) is an integrated component.

## Patentansprüche

1. Vorrichtung zur Regeneration optischer Signale durch eine Intensitäts- und Phasenmodulation dieser optischen Signale, wobei die besagte Vorrichtung
- einen modengekoppelten Laser beinhaltet, der es gestattet, ein Taktsignal zurückzugewinnen, das den Taktrhythmus der Bits der zu regenerierenden optischen Signale wiedergibt, und
- eine interferometrische Modulationsstruktur (5; 130) beinhaltet, die einen ersten (33; 132) und einen zweiten (35; 134) interferometrischen Zweig besitzt und es gestattet, die Amplitude und die Phase der optischen Signale mit dem besagten Taktsignal zu modulieren, und die ferner mindestens einen optischen Halbleiterverstärker (SOA1) beinhaltet, der im ersten interferometrischen Zweig (33; 132) angeordnet ist,
**dadurch gekennzeichnet, daß** der modengekoppelte Laser so mit dem besagten ersten interferometrischen Zweig (33; 132) gekoppelt ist, daß der besagte Verstärker (SOA1) des ersten interferometrischen Zweiges (33; 132) eine dem modengekoppelten Laser und der besagten interferometrischen Struktur (5; 130) gemeinsame Komponente ist.

2. Vorrichtung gemäß Anspruch 1, **dadurch gekennzeichnet, daß** der besagte Verstärker (SOA1) des ersten interferometrischen Zweiges (33; 132) so gewählt wird, daß die Modulation seiner Verstärkung, die über Sättigungseffekte durch das zu regenerierende optische Signal bewerkstelligt wird, eine Kopplung der Moden des besagten modengekoppelten Lasers auf einer Wellenlänge innerhalb des Emissionsbandes des Verstärkers (SOA1) des ersten interferometrischen Zweiges (33; 132) auslöst.

3. Vorrichtung gemäß Anspruch 1 oder 2, **dadurch gekennzeichnet, daß** ein zweiter optischer Halbleiterverstärker (SOA2) im zweiten interferometrischen Zweig (35; 134) angeordnet ist, sowie dadurch, daß sie einen zweiten modengekoppelten Laser beinhaltet, der die Rückgewinnung eines zweiten optischen Taktsignals gestattet, wobei dieses zweite Taktsignal zugleich den Taktrhythmus der Bits der zu regenerierenden optischen Signale wiedergibt und eine zweite Wellenlänge hat, die von der Wellenlänge des ersten modengekoppelten Lasers verschieden ist, wobei der zweite modengekoppelte Laser so mit dem besagten zweiten interferometrischen Zweig (35; 134) gekoppelt ist, daß der besagte Verstärker (SOA2) des zweiten interferometrischen Zweiges (35; 134) eine dem modengekoppelten Laser und der besagten interferometrischen Struktur (5; 130) gemeinsame Komponente ist.

4. Vorrichtung gemäß Anspruch 3, **dadurch gekennzeichnet, daß** der besagte zweite optische Halbleiterverstärker (SOA2) des zweiten interferometrischen Zweiges (35; 134) etwa identisch mit dem ersten optischen Halbleiterverstärker (SOA1) des ersten interferometrischen Zweiges (33; 132) ist.

5. Vorrichtung gemäß einem oder mehreren der Ansprüche 1 bis 4, **dadurch gekennzeichnet, daß** die besagte interferometrische Struktur (5) eine Struktur vom Michelson-Typ ist und überdies einen optischen Zirkulator (3; 100) beinhaltet, welcher ein erstes Tor (9; 102) zum Empfang des zu regenerierenden optischen Signals aufweist, ferner ein zweites Tor (15; 104), das an den interferometrischen Ein- und Ausgang der Michelson-Struktur angeschlossen ist, sowie ein drittes Tor, das den Ausgang bildet, an welchem das regenerierte optische Signal zur Verfügung steht.

6. Vorrichtung gemäß Anspruch 5, **dadurch gekennzeichnet, daß** der modengekoppelte Laser ein Ringlaser ist, beinhaltend
- eine zur Taktsignalrückgewinnung dienende Lichtleitfaser (7), deren Eingang mit einer Ausgangsfaser (27) gekoppelt ist, die wiederum mit dem dritten Tor (35) des besagten optischen Zirkulators (3) verbunden ist, und deren Ausgang mit ersten Vorrichtungen (41) zur Einkopplung der optischen Taktsignale in den ersten Zweig (33) der besagten interferometrischen Struktur (5) verbunden ist,
- den besagten ersten interferometrischen Zweig (33) mit dem besagten ersten optischen Verstärker (SOA1),
- eine Lichtleitfaser (17) zum Anschluß des interferometrischen Ein-/Ausgangs der interferometrischen Struktur (5) an das zweite Tor (15) des optischen Zirkulators (3) und
- ein Bandfilter (45) mit einer Zentralwellenlänge etwa bei der Wellenlänge der optischen Taktsignale, welches in der besagten Rückgewinnungsfaser (7) oder in den besagten Kopplungsvorrichtungen (41) angeordnet ist.

7. Vorrichtung gemäß Anspruch 5, **dadurch gekennzeichnet, daß** der erste Zweig (33) der besagten interferometrischen Struktur (5) einen Endpunkt (33C) aufweist, der für die zu regenerierenden optischen Signale reflektierend wirkt, jedoch für die optischen Signale bei der Wellenlänge der zurückgewonnenen Taktsignale zumindest teilweise durchlässig ist, wobei der modengekoppelte Laser ein Ringlaser ist, beinhaltend
- eine zur Rückgewinnung des Taktsignals dienende Faser (7), von welcher ein Ende mit dem besagten Ende (33C) des ersten Zweiges (33) gekoppelt ist und von welcher das andere Ende mit ersten Vorrichtungen (41) zur Einkopplung der optischen Taktsignale in den ersten Zweig (33) der besagten interferometrischen Struktur (5) verbunden ist,
- den besagten ersten interferometrischen Zweig (3) mit dem besagten ersten optischen Verstärker (SOA1) und
- ein Bandfilter (45) mit einer Zentralwellenlänge etwa bei der Wellenlänge der optischen Taktsignale, welches in der besagten Rückgewinnungsfaser (7) oder in den besagten Kopplungsvorrichtungen (41) angeordnet ist.

8. Vorrichtung gemäß einem oder mehreren der Ansprüche 5 bis 7, **dadurch gekennzeichnet, daß** sie außerdem zweite Vorrichtungen (72) zur Einkopplung der zurückgewonnenen optischen Taktsignale in den zweiten Zweig (35) der interferometrischen Struktur (5) beinhaltet.

9. Vorrichtung gemäß einem oder mehreren der Ansprüche 6 bis 8, **dadurch gekennzeichnet, daß** in der besagten Rückgewinnungsfaser (7) ein optischer Isolator (70) angeordnet ist, um die Zirkulationsrichtung der zurückgewonnenen optischen Taktsignale vorzugeben.

10. Vorrichtung gemäß einem oder mehreren der Ansprüche 6 bis 9, **dadurch gekennzeichnet, daß** in der besagten Rückgewinnungsfaser (7) eine Vorrichtung (47) zur zeitlichen Taktsignal-Speicherung angeordnet ist, um die verschiedenen Spektralanteile der zurückgewonnenen optischen Taktsignale zu glätten.

11. Vorrichtung gemäß Anspruch 10, **dadurch gekennzeichnet, daß** die besagten Speichervorrichtungen (47) eine Lichtleitfaser von zuvor festgelegter Länge beinhalten.

12. Vorrichtung gemäß einem oder mehreren der Ansprüche 6 bis 11, **dadurch gekennzeichnet, daß** in den besagten ersten Kopplungsvorrichtungen (41) ein zusätzlicher optischer Halbleiterverstärker (SOA4) angeordnet ist.

13. Vorrichtung gemäß Anspruch 5, **dadurch gekennzeichnet, daß** der modengekoppelte Laser ein Laseroszillator mit Hohlraumresonator ist, beinhaltend
- den ersten Zweig (33) der besagten interferometrischen Struktur (5) und sein sowohl für die zu regenerierenden optischen Signale als auch für die regenerierten optischen Taktsignale reflektierendes Ende (33A),
- einen Nebenzweig (60) der besagten interferometrischen Struktur, von welchem ein Ende (61) mit dem besagten ersten Zweig (33) gekoppelt ist und von welchem das andere Ende (63) für die optischen Taktsignale reflektierend ist, und
- ein Bandfilter mit einer Zentralwellenlänge etwa bei der Wellenlänge der optischen Taktsignale, welches im besagten Nebenzweig (60) angeordnet ist.

14. Vorrichtung gemäß Anspruch 13, **dadurch gekennzeichnet, daß** das besagte Bandfilter (65) ein Bragg-Reflektor ist.

15. Vorrichtung gemäß Anspruch 13 oder 14, **dadurch gekennzeichnet, daß** im besagten Nebenzweig (60) eine Phasenzone (67) vorgesehen ist, die eine Justierung der optischen Länge des Hohlraums gestattet.

16. Vorrichtung gemäß einem oder mehreren der Ansprüche 13 bis 15, **dadurch gekennzeichnet, daß** im besagten Nebenzweig (60) ein zusätzlicher optischer Halbleiterverstärker (SOA5) angeordnet ist.

17. Vorrichtung gemäß einem oder mehreren der Ansprüche 13 bis 16, **dadurch gekennzeichnet, daß** die interferometrische Struktur (5) und der modengekoppelte Laser auf demselben Substrat integriert sind.

18. Vorrichtung gemäß einem oder mehreren der Ansprüche 1 bis 4, **dadurch gekennzeichnet, daß** die besagte interferometrische Struktur eine Struktur vom Mach-Zehnder-Typ ist.

19. Vorrichtung gemäß Anspruch 18, **dadurch gekennzeichnet, daß** der modengekoppelte Laser ein Ringlaser ist, beinhaltend
- eine zur Taktsignalrückgewinnung dienende Faser (144), von welcher der Eingang mit ersten Kopplungsvorrichtungen (148) gekoppelt ist, die es gestatten, das Taktsignal aus dem besagten ersten Zweig (132) auszukoppeln, und von welcher der Ausgang an zweite Kopplungsvorrichtungen (152) angeschlossen ist, um optische Taktsignale, die in der Rückgewinnungsfaser (144) zirkulieren, in den ersten Zweig (132) einzukoppeln,
- einen optischen Isolator (154), um die Ausbreitungsrichtung der zurückgewonnenen optischen Taktsignale vorzugeben, und
- ein Bandfilter (45) mit einer Zentralwellenlänge etwa bei der Wellenlänge der optischen Taktsignale.

20. Vorrichtung gemäß Anspruch 19, **dadurch gekennzeichnet, daß** die durch den optischen Isolator vorgegebene Ausbreitungsrichtung der Taktsignale entgegengesetzt zur Ausbreitungsrichtung der zu regenerierenden Signale ausgerichtet verläuft.

21. Vorrichtung gemäß Anspruch 18, **dadurch gekennzeichnet, daß** der modengekoppelte Laser ein Laseroszillator mit Hohlraumresonator ist, beinhaltend
- einen ersten Nebenzweig (160) der besagten interferometrischen Struktur (130), von welchem ein Ende (162) für die optischen Taktsignale totalreflektierend ist und von welchem das andere Ende (164) mit dem besagten ersten Zweig (132) gekoppelt ist,
- den besagten ersten Zweig (132) der besagten interferometrische Struktur (130), welcher den mittleren Teil des Hohlraums festlegt, und
- einen zweiten Nebenzweig (166), von welchem ein Ende mit dem besagten ersten Zweig gekoppelt ist, und von welchem das andere Ende für die optischen Taktsignale totalreflektierend ist.

22. Vorrichtung gemäß Anspruch 21, **dadurch gekennzeichnet, daß** die besagte interferometrische Struktur (130) und der modengekoppelte Laser als integrierte Bauelemente auf demselben Substrat untergebracht sind.

23. Vorrichtung gemäß Anspruch 21 oder 22, **dadurch gekennzeichnet, daß** diese eine Faser (176) beinhaltet, welche einen Teil der Leistung der regenerierten optischen Taktsignale in den zweiten Zweig (134) der besagten interferometrischen Struktur (130) einkoppelt.

24. Vorrichtung gemäß einem oder mehreren der vorgenannten Ansprüche, **dadurch gekennzeichnet, daß** die besagte interferometrische Struktur (5; 130) ein integriertes Bauelement ist.
